# EUROPEAN PATENT APPLICATION

(11) **EP 3 138 802 A1**
(43) Date of publication of application: **08.03.2017**
(21) Application number: 15799380.9
(22) Date of filing: 20.05.2015
(51) Int. Cl.: B66B 5/02, B66B 1/30, H02P 3/06, H02P 27/06, H02P 29/00

(54) **ELEVATOR CAR MOVEMENT CONTROL DEVICE AND CAR MOVEMENT CONTROL METHOD**

(30) Priority: 30.05.2014 JP 2014111822
(71) Applicant: Meidensha Corporation, Tokyo 141-6029 (JP)
(72) Inventor: OTSUBO, Masayuki, Tokyo 141-6029 (JP); MIYAMOTO, Yasumasa, Tokyo 141-6029 (JP)
(74) Representative: Manitz, Finsterwald & Partner GbR
(86) International application number: PCT/JP2015/064415
(87) International publication number: WO 2015/182446

(57) **Abstract**

A elevator car movement control apparatus is provided to move an elevator car in a light load direction judged without using a load or torque sensor at the time of power outage. A control section of an inverter 80 supplying a voltage to an elevator drive motor 50 includes a speed control system arranged to determine a torque command value from a deviation between a speed command and a sensed speed and to control the speed of motor 50 in accordance with the torque command value, including a zero speed region, controls the speed control system in a zero speed control in an open state of a brake at the time of operation by an emergency power source due to outage of an input power source, calculates a torque command value in the speed control system at that time, to detect the light load direction of the motor decided by the weight balance between a counterweight 53 and the car 54 among the rotational directions sensed by an encoder 56, and controls the car 54 to move in the light load direction with a speed command value corresponding to the detected light load direction.

## Description

### Technical Field

The present invention relates to control apparatus and method, in an inverter for an elevator, for moving an elevator car to an adjacent floor with effective electric power consumption by controlling a motor by the use of an emergency power source such as an uninterruptible power supply (referred to as UPS, hereinafter) or a battery at the time of outage or power loss of a normal input power source.

### Background Art

The inverter for an elevator is provided with a function of moving an elevator car to an adjacent floor to prevent entrapment of passenger or passengers between floors in the car at the time of power outage by driving a motor with an emergency power source or power supply such as UPS and battery.

In this function, a direction of lighter load (light load direction) is determined from the load of the elevator car by using a torque sensor or a load sensor and the elevator car is moved in the light load direction with input of a drive command from a controller in that direction. Thereby, the controlling section of the system suppresses the power consumption of the UPS or Battery. This earlier technology is disclosed in Patent Document 1 and Patent Document 2.

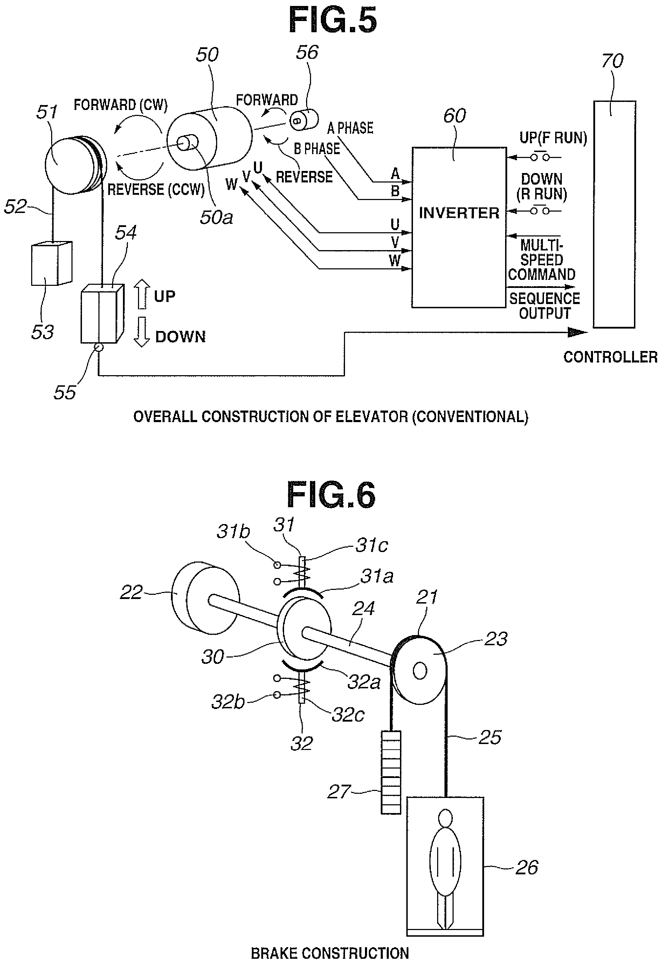

FIG. 5 shows the construction of an elevator system employing inverter, motor and load sensor in one example of the earlier technology. The elevator system of FIG. 5 includes an elevator drive motor 50 and a sheave 51 fixedly mounted on a rotation shaft 50a of motor 50.

A main rope or cable 52 is wound on the sheave 51. A counterweight 53 is fixed at one end of main rope 52. An elevator car or cage 54 is fixed at the other end of main rope 52. A load sensor 55 is provided at the lower end of elevator car 54.

An encoder 56 is attached to the rotation shaft 50a of motor 50 and serves as a sensor for sensing the rotational speed and rotational direction.

An inverter 60 receives sensor information of the rotational speed and direction of encoder 56, converts electric power of an input power source or an emergency power source such as UPS or battery not shown in FIG. 5, to a predetermined voltage, and controls the rotation of motor 50 by application to U phase, V phase and W phase of motor 50.

A controller 70 performs communication of sequence signals regarding the operation of the inverter, with inverter 60. Controller 70 delivers a forward run command (UP (F RUN)) for forward drive, a reverse run command (DOWN (R RUN)) for reverse drive, a multi-speed command etc. to inverter 60. Controller 70 receives the load information from load sensor 55, and various sequence outputs from inverter 60.

Moreover, a brake is provided as shown in FIG. 6, for example, for mechanically stopping the rotation shaft 50a between motor 50 and sheave 51 at the time of elevator stoppage. The brake system of FIG. 6 includes two sets of electromagnetic brakes (brake 31 and brake 32) as disclosed in Patent Document 3. A main rope 25 is wound over a sheave 23 of a hoist 21 and arranged to hang a car 26 and a counterweight 27. Sheave 23 is connected directly with an electric motor 22 via a rotation shaft 24, and a brake wheel 30 is fixedly mounted on rotation shaft 24.

At the time of stoppage of car 26, brake coils 31 b and 32b are deenergized by opening of an unillustrated brake controlling means, and brake shoes 31a and 32a are pressed forcibly on the brake wheel 30 by respective springs not shown, to hold the rotation shaft 24 stationary.

To move the car 26 up or down, the unillustrated brake controlling means is closed and hence the brake coils 31b and 32b are energized to attract respective plungers 31c and 32c and thereby retract the brake shoes 31a and 32a against the springs. Thus, the brake wheel 30 is released and the motor 22 is driven for rotation.

The speed control system of the motor in the present invention utilizes the speed control system disclosed in Patent Document 4.

### Prior Art Documents

### Patent Documents

Patent Document 1: JP2006-82944A
Patent Document 2: JP2013-147328A
Patent Document 3: JP2001-268572A
Patent Document 4: JP5266799B2

### Summary of the Invention

In the case of the drive with UPS or battery as the emergency power source, the power is consumed by the motor drive to move the elevator car. If the power capacity stored in the UPS or battery is smaller than the quantity of power consumed until the arrival and stoppage at the adjacent floor, the car stops halfway and the passengers are entrapped again halfway between the floors. To prevent this, the car movement control is required to consume power effectively.

As part of such a measure, a controlling system according to one method is arranged to suppress the power consumption of the motor by measuring the loads of the car and counterweight and move the car in the light load direction.

In the general system, the weights of the car and counterweight are measured, for example, with the load sensor 55 shown in FIG. 5, and the result of the measurement is sent to the controller 70. Controller 70 receives the measurement result and delivers the drive command in the light load direction, to the inverter 60. However, this controlling system is problematical in the following points.

The cost is increased by the installation of the sensor, and the space is required for the installation of the sensor.

The movement might be in a heavy load direction because of operation delay of the controller, wrong transmission by the controller, of the forward drive command (UP (F RUN)) or the reverse drive command (DOWN (R RUN)) due to disturbance noise in the controller, and wrong detection due to disturbance noise in the sensor signal from the load sensor 55. In this case, the power consumption of the UPS or battery becomes greater and increases the risk of entrapment in the car immovable between floors.

The present invention has been devised to solve the above-mentioned problems. It is an object of the present invention to provide elevator car movement control apparatus and method to detect a light load direction without using load sensor and torque sensor and to move the elevator car to a floor in the light load direction, thereby to suppress the power consumption of the UPS or battery at the time of power outage.

To solve the above-mentioned problems, an elevator car movement control apparatus as recited in claim 1 comprises: an elevator drive motor; a sheave fixedly mounted on a rotation shaft of the drive motor; a main rope wound around the sheave and arranged to support a counterweight at a first end of the main rope and an elevator car at a second end of the main rope; a brake to stop rotation of the rotation shaft of the motor; an encoder to sense a rotational speed and a rotational direction of the motor; an inverter which includes a control section including a speed control system configured to determine a torque command from a calculation result of a speed control amplifier performing a proportional-integral calculation on a deviation between a speed command and a sensed speed and configured to control the motor to vary the speed in a speed region including a zero speed region and which is arranged to convert power from one of an input power source and an emergency power source and to supply power to the motor; and a controller to perform communication of sequence signals regarding operation of the inverter, with the inverter,
the controller including a function of performing a control operation to changeover input of the inverter to the emergency power source at a time of outage of the input power source, a function of controlling an open/close condition of the brake and a function of transmitting a multi-speed command sequence signal to the inverter;
the control section of the inverter including, a zero speed control function of controlling the speed control system by performing a zero speed control of the speed control system in an open state of the brake at the time of outage of the input power source, a light load direction detecting section to determine a value of the torque command of the speed control system at a time of execution of the zero speed control, and to detect a light load direction of the motor decided by a weight balance between the elevator car and the counterweight among rotational directions of the motor sensed by the encoder, in accordance with a polarity of the calculated value of the torque command, and a function of calculating a value of the speed command in accordance with a motor rotational direction of the detected light load direction and the multi speed command sequence signal from the controller, and controlling the speed control system with the calculated value of the speed command, as the speed command to the speed control system in the open state of the brake after the light load direction is detected by the light load detecting section.

An elevator car movement control method in an apparatus comprising: an elevator drive motor; a sheave fixedly mounted on a rotation shaft of the drive motor; a main rope wound around the sheave and arranged to support a counterweight at a first end of the main rope and an elevator car at a second end of the main rope; a brake to stop rotation of the rotation shaft of the motor; an encoder to sense a rotational speed and a rotational direction of the motor; an inverter which includes a control section including a speed control system configured to determine a torque command from a calculation result of a speed control amplifier performing a proportional-integral calculation on a deviation between a speed command and a sensed speed and configured to control the motor to vary the speed including a zero speed region and which is arranged to convert power from one of an input power source and an emergency power source and to supply power to the motor; and a controller to perform communication of sequence signals regarding operation of the inverter, with the inverter,
the elevator car movement control method comprising:
a step of performing a control operation to changeover input of the inverter to the emergency power source at a time of outage of the input power source with the controller; a step of transmitting a multi-speed command sequence signal of a zero speed, to the inverter with the controller; a step of controlling the brake to an open state with the controller,
a step of performing a zero speed control of the speed control system at a zero speed in the open state of the brake at the time of outage of the input power source, with the control section of the inverter,
a light load direction detecting step of calculating a value of the torque command of the speed control system at a time of execution of the zero speed control, and detecting a light load direction of the motor decided by a weight balance between the elevator car and the counterweight among rotational directions of the motor sensed by the encoder, in accordance with a polarity of the calculated value of the torque command, with a light load direction detecting section of the control section of the inverter,
a step of setting the multi speed command sequence signal to be transmitted to the inverter, to a speed other than the zero speed at a time of detection of the light load direction of the motor by the light load direction detecting step, with the controller,
a step of calculating a value of the speed command in accordance with a motor rotational direction of the light load direction and the multi speed command sequence signal from the controller, and controlling the speed control system by using the calculated value of the speed command as the speed command to the speed control system, with the control section of the inverter, in the open state of the brake after the light load direction is detected at the light load detecting step.

When the zero speed control is being carried out in the speed control system of the above-mentioned system, the light load direction is the direction rotating toward the counterweight in the case of the weight relationship in which the weight of the counterweight > the weight of the elevator car, and the light load direction is the direction rotating toward the elevator car in the case of the weight relationship in which the weight of the counterweight < the weight of the elevator car. In the zero speed control, the load torque is produced to hold the car stationary without allowing rotation in the light load direction. In this case, the command of torque determined by the speed control system has the polarity which corresponds to the light load direction. Therefore, the controlling section of the system can determine or detect the light load direction on the basis of the polarity of the command of torque readily without using a sensor such as the load sensor and torque sensor.

Without the need for the load sensor and torque sensor, this elevator car movement control system is very advantageous in the cost and required space of the sensor device.

The inverter is arranged to detect the light load direction and control the movement of the elevator car without regard to the movement direction command of the controller. Therefore, this controlling system can prevent movement of the car in the heavy load direction due to wrong transmission of the forward drive command (UP (F RUN)) or the reverse drive command (DOWN (R RUN)) from the controller, and avoid the risk of increase of the power consumption and entrapment between floors due to the movement in the heavy load direction.

Moreover, the system requiring no load sensor and no torque sensor can prevent movement of the car in the heavy load direction due to wrong detection of the sensor, and avoid the risk of increase of the power consumption and entrapment between floors due to the movement in the heavy load direction.

The system according to the present invention can detect the light load direction without using the external load or torque sensor, and hence eliminate the need for the cost and space needed by the installation of the sensor.

Since the light load direction is detected on the inverter's side, and the movement of the car is controlled on the inverter's side without regard to the movement direction command from the controller, the system can prevent the risk of the power consumption increase and entrapment in the car stopped between floors caused by the erroneous transmission of the signal from the controller to the inverter and the movement in the heavy load direction.

Moreover, without the need for the external load or torque sensor, the system can prevent the risk of the power consumption increase and entrapment in the car stopped between floors caused by the erroneous detection by the use of the sensor and the movement in the heavy load direction.

### Brief Description of the Drawings

FIG. 1 is a diagram showing the overall construction of an elevator system in a practical example according to an embodiment of the present invention.
FIG. 2(a) is a diagram showing the connection arrangement of an input power source, an emergency power source and an inverter in the practical example according to the present invention. FIG. 2(b) is a view showing signal waveforms at various portions shown in FIG. 2(a).
FIG. 3 is a block diagram showing one example of a motor speed control system in a control section of the inverter in the practical example according to the present invention.
FIG. 4 is a timing chart showing operations in a light load direction detecting process of the practical example according to the present invention.
FIG. 5 is a diagram showing the overall construction of an elevator of earlier technology.
FIG. 6 is a diagram showing the construction of a brake used in the elevator.

### MODE(S) FOR CARRYING OUT THE INVENTION

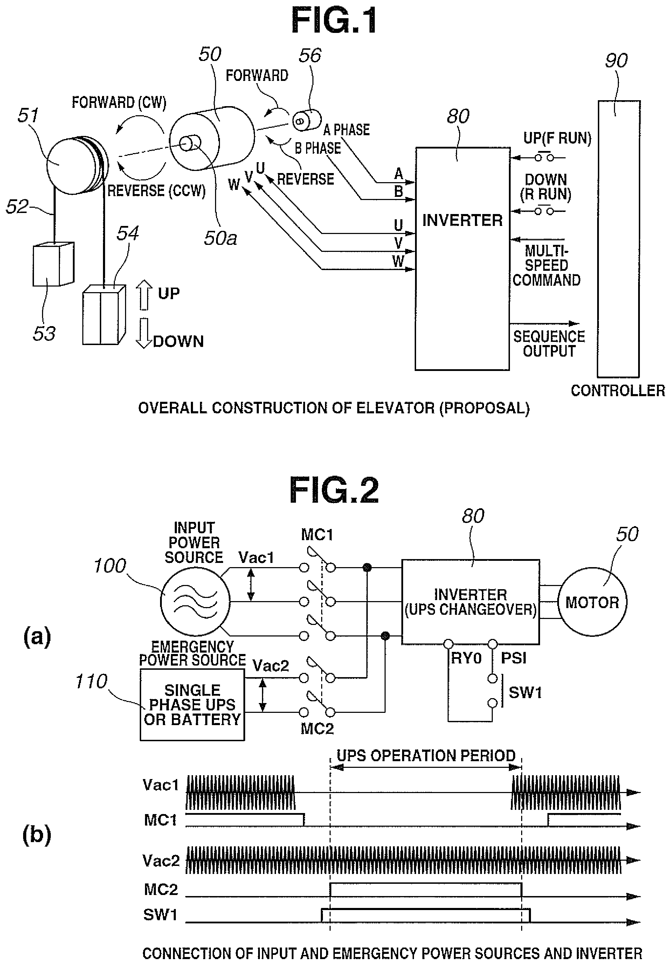

Following is explanation on embodiment(s) of the present invention with reference to the drawings. However, the present invention is not limited to the following embodiment(s). FIG. 1 shows the overall construction of an elevator system in a practical example according to an embodiment of the present invention. FIG. 2 shows the arrangement in which an input power source, an emergency power source, an inverter and a motor are connected in the practical example according to the embodiment.

In FIG. 1, motor 50, rotation shaft 50a, sheave 51, main rope 52, counterweight 53, elevator car or cage 54 and encoder 56 are constructed in the same manner as in FIG. 5. However, in this embodiment of the present invention, the load sensor 55 of FIG. 5 is not provided.

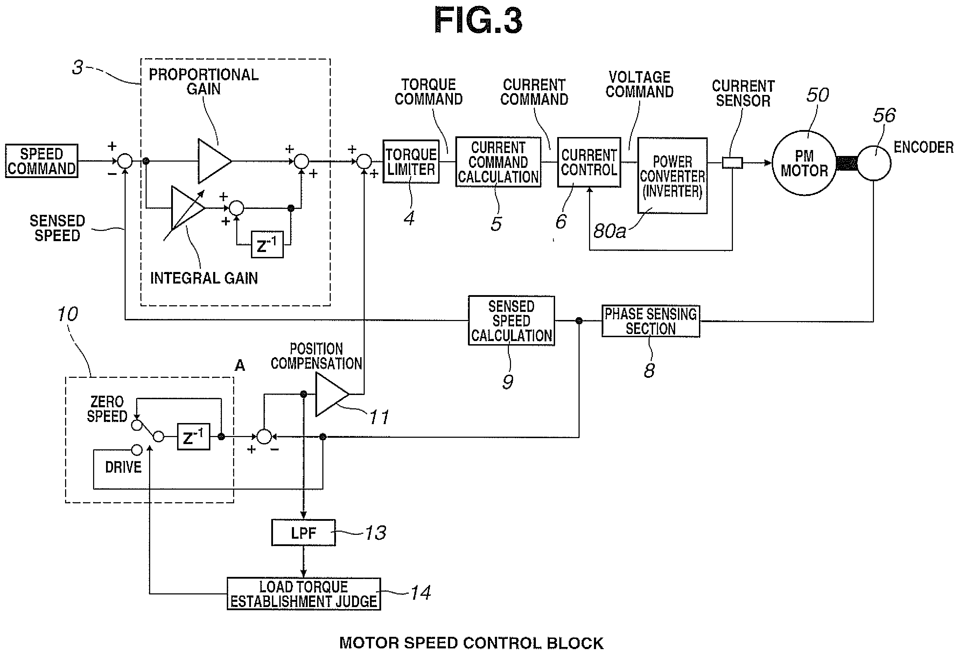

Inverter 80 includes a power converting section and a control section. For example, the power converting section includes a configuration of three-phase bridge connection of switching devices. For example, the control section includes a later-mentioned motor speed control system (speed control block) as shown in FIG. 3, and a light load direction detecting section to detect a light load direction of motor 50 in accordance with the polarity of a command value of torque of the speed control system.

The inverter 80 receives sensing result information (A, B) of rotational speed and rotational direction from encoder 56, converts, to a predetermined voltage, power of an input power source 100 or an emergency power source 110 shown in FIG. 2(a), applies the voltage to the U phase, V phase and W phase of motor 50, and thereby controls the rotation of motor 50.

A controller 90 performs communication of sequence signals regarding the inverter operation, with inverter 80.

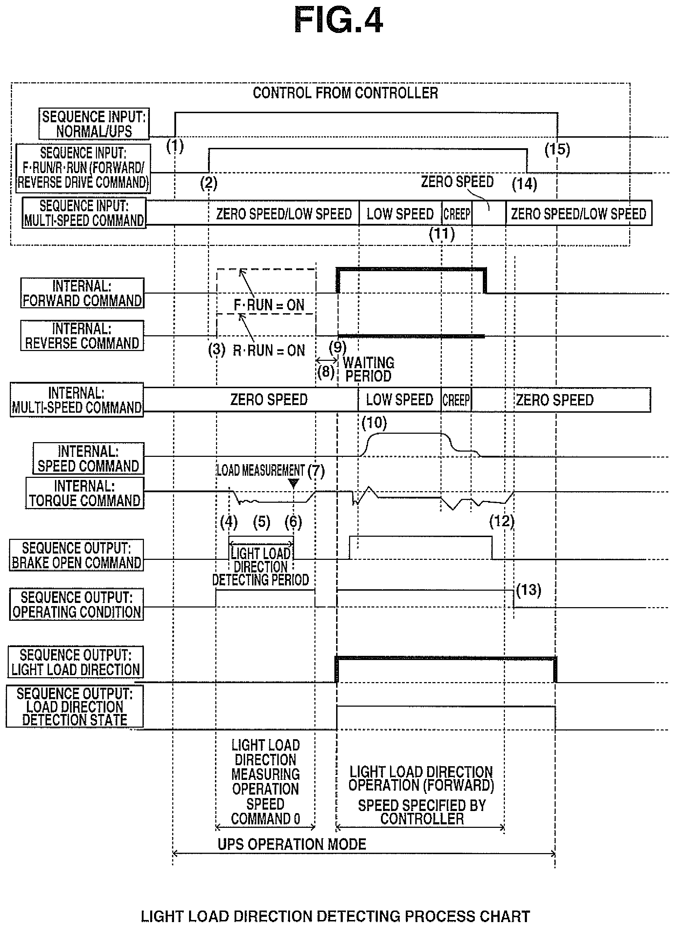

The sequence signals transmitted from controller 90 to inverter 80 comprise a changeover command (Normal/UPS) to change over the operation of the normal input power source 100 and the operation of the emergency power source 110, a forward rotation drive command (UP (F RUN)), a reverse rotation drive command (DOWN (R RUN)), and a multi speed command of a zero speed, a high speed, a low speed, and a creep speed, as shown in an upper tier of FIG. 4 mentioned later.

The sequence signals transmitted from inverter 80 to controller 90 comprise a brake open command, a signal representing an operating condition, a signal notifying the detected light load direction and a signal representing the load direction sensing condition, as shown in a lower tier of FIG. 4 mentioned later.

Though omitted in FIG. 1, there is provided a brake to stop the rotation shaft 50a between motor 50 ad sheave 51 mechanically at the time of stoppage of the elevator. For example, the brake apparatus shown in FIG. 6 is employed as the brake.

FIG. 2(a) shows the connection arrangement to change over the input to inverter 80 between the input power source 100 and the emergency power source 110, with electromagnetic contactors MC1 and MC2.

FIG. 2(b) shows signals at various portions of FIG. 2(a). Vac1 represents an interphase voltage of input power source 100. Vac2 represents an output voltage of emergency power source 110. SW1 represents a signal of a switch (SW1) which is turned on (closed) by an operation changeover signal delivered from controller 90 at the time of outage of the input power source 100. MC1 represent a signal of the electromagnetic contactor (MC1) which is turned on (closed) in the normal state of the input power supply 100 and turned off (opened) at the time of power outage. MC2 represent a signal of the electromagnetic contactor (MC2) which is turned off (opened) in the normal state of the input power source 100 and turned on (closed) at the time of power outage. Therefore, the period during which the electromagnetic contactor MC2 is on (closed) corresponds to the operating period by the emergency power source 110 (UPS operation mode).

As emergency power source 110, it is possible to use a single-phase UPS or battery, or a 3 phase UPS.

The motor speed control system (speed control block) provided in the control section of inverter 80 is illustrated in FIG. 3. The system of FIG. 3 corresponds to a speed control block shown in FIG. 1 of Patent Document 4.

In FIG. 3, motor 50 (PM motor) is driven at a variable speed by an output (output having controlled frequency and controlled voltage) of a power converter 80a of inverter 80. For the output control of power converter 80a, a speed control amplifier 3 performs a calculation of a proportional-integral (PI) algorithm on a deviation between a speed command and a signal of sensed motor speed obtained by encoder 56, a phase sensing section 8 and a speed sensing section 9. The result of this calculation is limited by a torque limiter 4. A current command calculating section 5 converts a thus-obtained torque command to a current command corresponding to the torque command. A current control amplifier 6 performs a proportional-integral calculation on a deviation between this current command and a signal of a sensed motor current. The output of power converter 80a is controlled with the result of the calculation in the current control amplifier 6.

As to the detection of the motor speed, the phase sensing section 8 senses the rotational position of the rotor of the motor, as the phase (position) from the pulse output of encoder 56, and the speed sensing section 9 determines the speed from time variation of this rotational position.

A holding circuit 10 switches speeds at a zero speed control and a normal drive with a hold switch, and holds the signal of the sensed motor rotor position for a one control period with a buffer (Z⁻¹) when the motor speed control condition is in a normal drive speed region. When the motor speed control condition is in a zero speed region, the holding circuit 10 continues to hold the position signal just before the zero speed region is reached.

A position compensating amplifier 11 produces a signal of a position compensating torque by amplifying a deviation between the signal of the sensed rotor position of the motor and the hold signal of the holding circuit 10, with a fixed gain, and add this signal of the position compensating torque to the torque command outputted from the speed control amplifier 3. At the time of the normal drive, the output torque of the position control remains unchanged by updating of the buffer (Z⁻¹) of holding circuit 10.

During the zero speed control, an integration buffer (Z⁻¹) of the speed control amplifier 3 is reset when the position compensating torque is produced by the position compensating amplifier 11. At the time of transition from the zero speed control mode to the normal drive mode, the position compensating torque before the transition is added to the integration buffer to prevent an abrupt torque change at the time of the transition.

A low-pass filter 13 receives, as input, the position deviation signal at an A point to be inputted to the position compensating amplifier 11, and remove vibrational component included in the position deviation signal, by performing an averaging or levering operation. A load torque establishment judging section 14 monitors whether the position deviation signal obtained through the low-pass filer 13 becomes stable or not. When the position deviation signal becomes stable, the load torque establishment judging section 14 judges that the load component torque is established, and changes over the operation of holding circuit 10 to the normal drive mode.

With the above-mentioned control, the system can improve the speed control performance at the time of the zero speed control, and suppress fluctuation of the position of elevator car 54 by producing a required torque within 100 ms, for example, after the release of the brake even when the load sensor 55 of FIG. 5 is omitted.

A light load detecting section provided in the control section of inverter 80 in this practical example of the embodiment is configured to calculate or determine a value of the torque command (the output of the torque limiter 4) at the time of execution of the zero speed control in the speed control block of FIG. 3, to check the polarity of the calculated value of the torque command and thereby to detect the light load direction of the motor determined by the weight balance of the counterweight 53 and the elevator car 54 among the motor rotational directions detected by the encoder 56 on the basis of the polarity of the torque command value.

FIG. 4 is a chart for illustrating the flow of operations to detect the light load direction in this practical example.

In FIG. 4, a signal name "sequence input" represents sequence signal or signals inputted from controller 90 to inverter 80 shown in FIG. 1. A signal name "sequence output" in FIG. 4 represents sequence signal or signals outputted from inverter 80 to controller 90 shown in FIG. 1. A signal name "interval" in FIG. 4 represents internal signal or signals operated inside the inverter 80. Forward rotation command, reverse rotation command, multi speed command, speed command and torque command are included as the internal signals.

### <Timing (1)>

Power outage occurs in input power source 100 of FIG. 2. A sequence input of "normal/UPS" in FIG. 4 is turned ON and the UPS operation mode is started. Thereby, MC1 of FIG.2 is opened, MC2 is closed, and hence the supply of power from UPS (emergency power source 110) to inverter 80 is started (by controller 90, a changeover control to the emergency power source). Furthermore, controller 90 sets the speed command for motor 50 to zero so that the speed command=0. Accordingly, the internal signal of "multi-speed command" is set to "zero speed".

### <Timing (2)>

Either of the forward rotation command or the reverse rotation command from controller 90 turns ON.

### <Timing (3)>

In response to the command at the timing (2), the internal operation command (the internal forward rotation command or the internal reverse rotation command) inside inverter 80 is turned ON, and the operation is started with the speed command =0. The motor speed control is performed by the use of the control block of FIG. 3. The sequence output of the operating condition is turned ON.

### <Timing (4)>

The brake is opened by turning the sequence output of brake open command in FIG. 4 ON. Specifically, the inverter 80 delivers the signal to open the brake, to controller 90, and the controller 90 performs the control to open the brake.

### <Period (5)>

During a predetermined time period, the speed command is set equal to 0, and the brake is held open by setting the sequence output of brake open command in FIG. 4 ON. A value of the torque command calculated by the control block of FIG. 3 during this period (5) is recorded in an unillustrated memory in the control section.

Following is explanation on the polarity of the torque command with reference to FIG. 1.

When the weight of car 54 is greater than the weight of counterweight 53, the car 54 moves in the downward direction (the rotation is in the reverse direction (CCW) shown in the figure) if only their own weights act. In this situation, the motor 50 is controlled with the speed command being set equal to 0. Therefore, the polarity of the torque command is in the forward rotational direction (CW) of motor 50. Consequently, the motor speed is held equal to zero, and the car 54 is held stationary.

When the weight of car 54 is smaller than the weight of counterweight 53, the car 54 moves in the upward direction (the rotation is in the forward direction (CW) shown in the figure) if only their own weights act. In this situation, the motor 50 is controlled with the speed command being set equal to 0. Therefore, the polarity of the torque command is in the reverse rotational direction (CCW) of motor 50.

### <Timing (6)>

At the expiration of the predetermined time period (Period (5)), the sequence output of brake open command is turned OFF and the brake is closed. Specifically, the inverter 80 sends the signal to close the brake, to controller 90, and the controller 90 performs the control operation to close the brake.

### <Timing (7)>

The light load direction is determined from the polarity of the value of the torque command recorded in the period (5). The operation of inverter 80 is stopped temporarily because the brake is closed at timing (6). Moreover, the sequence output of operating condition is turned OFF at this instant.

### < Period (8)>

After the timing (7), there is provided a waiting time for holding the closed state of the brake for a predetermined time interval. Thus, an operation of standby is performed.

### <Timing (9)>

After the expiration of the waiting time (period (8)), the rotational direction of motor 5o is determined from the light load direction measured at the timing (7), and one of the internal forward rotation command and the internal reverse rotation command in FIG.4 is turned ON.

The internal forward rotation command is selected when the light load direction is toward the counterweight 53 (the polarity of the torque command value recorded in the period (5) is the reverse rotational direction of the motor), as in the case of FIG. 1. The internal reverse rotation command is selected when the light load direction is toward the car 54 (the polarity of the torque command value recorded in the period (5) is the forward rotational direction of the motor 50).

FIG. 4 shows the example in which the light load direction is toward the counterweight 53 and the internal forward rotation command is turned ON. This internal forward rotation command may be different from the sequence input of the forward drive command (or the reverse drive command) which is turned ON at timing (2).

Furthermore, the sequence output of the operating condition shown in FIG. 4 is turned ON again at this instant. Furthermore, signals (a sequence output of light load direction detection state and a sequence output of light load direction) are outputted to inform controller 90 of the completion of detection of the light load direction, and the light load direction.

### <Timing (10)>

Controller 90 changes the sequence input of multi-speed command to the low speed. In response to this, the multi-speed command inside the inverter is changed over from the zero speed to the low speed, and the operation of inverter 80 is started. The internal speed command varies from 0 as shown in FIG. 4. The internal speed command is determined by calculation from the low speed command inside the inverter and the rotational direction of motor 70 determined at timing (9). In the example of FIG. 4, the polarity of the internal torque command is negative (the reverse rotational) direction (CCW) of motor 50) and hence the polarity of the internal speed command is positive (the forward rotation direction (CW) of motor 50).

The sequence output of brake open command is set ON at an instant between the timing (9) and the timing (10), and the brake is controlled in the open state at the timing (10).

### <Timing (11)>

When the car 54 approaches the destination floor, the controller 90 changes the sequence input of multi-speed command to the creep speed and to the zero speed. When the zero speed is reached, the internal forward or reverse rotation command is turned OFF (the internal forward rotation command is turned OFF in this example) as shown in FIG. 4, and inverter 80 is stopped. The brake is closed by turning the sequence output of brake open command OFF. At this time, the car 54 is located stopped at the target floor.

### <Timing (12)>

After the stoppage of inverter 80, the brake is in the closed state.

### <Timing (13)>

In response to the stoppage of inverter 80, the sequence output of operating condition is turned OFF, as shown in FIG. 4.

### <Timing (14)>

The drive command (the sequence input (forward/reverse drive command of FIG. 4) from controller 90 is turned OFF.

### <Timing (15)>

The power supply to inverter 80 is changed over from UPS (emergency power source 110) to input power source 100 by turning the sequence input of normal/UPS OFF (MC1 is turned ON and MC2 is turned OFF). Thus, the power outage operation (UPS operation mode) is finished.

The interval of the timings (3) ∼ (7) is the operating period for the measurement of the load direction at the speed command of zero. The interval of the timings (4) ∼ (6) is the period for detecting the light load direction. The interval of the timings (9) ∼ (12) is the period of the drive in the light load direction (the forward rotation in this example) by the multi-speed command from controller 90.

With these operations, the system can move the elevator car 54 to a floor in the light load direction at the time of power loss.

## Claims

1. An elevator car movement control apparatus comprising: an elevator drive motor; a sheave fixedly mounted on a rotation shaft of the drive motor; a main rope wound around the sheave and arranged to support a counterweight at a first end of the main rope and an elevator car at a second end of the main rope; a brake to stop rotation of the rotation shaft of the motor; an encoder to sense a rotational speed and a rotational direction of the motor;
an inverter which includes a control section including a speed control system configured to determine a torque command from a calculation result of a speed control amplifier performing a proportional-integral calculation on a deviation between a speed command and a sensed speed and configured to control the motor to vary the speed including a zero speed region and which is arranged to convert power from one of an input power source and an emergency power source and to supply power to the motor; and
a controller to perform communication of sequence signals regarding operation of the inverter, with the inverter,
the controller including a function of performing a control operation to changeover input of the inverter to the emergency power source at a time of outage of the input power source, a function of controlling an open/close condition of the brake and a function of transmitting a multi-speed command sequence signal to the inverter;
the control section of the inverter including,
a zero speed control function of performing a zero speed control of the speed control system in an open state of the brake at the time of outage of the input power source,
a light load direction detecting section to calculate a value of the torque command of the speed control system at a time of execution of the zero speed control, and to detect a light load direction of the motor determined by a weight balance between the elevator car and the counterweight among rotational directions of the motor sensed by the encoder, in accordance with a polarity of the calculated value of the torque command, and
a function of calculating a value of the speed command in accordance with a motor rotational direction of the light load direction and the multi speed command sequence signal from the controller, and controlling the speed control system with the calculated value of the speed command as the speed command to the speed control system in the open state of the brake after the light load direction is detected by the light load detecting section.

2. An elevator car movement control method in an apparatus comprising: an elevator drive motor; a sheave fixedly mounted on a rotation shaft of the drive motor; a main rope wound around the sheave and arranged to support a counterweight at a first end of the main rope and an elevator car at a second end of the main rope; a brake to stop rotation of the rotation shaft of the motor; an encoder to sense a rotational speed and a rotational direction of the motor;
an inverter which includes a control section including a speed control system configured to determine a torque command from a calculation result of a speed control amplifier performing a proportional-integral calculation on a deviation between a speed command and a sensed speed and configured to control the motor to vary the speed including a zero speed region and which is arranged to convert power from one of an input power source and an emergency power source and to supply power to the motor; and
a controller to perform communication of sequence signals regarding operation of the inverter, with the inverter,
the elevator car movement control method comprising:
a step of performing a control operation to changeover input of the inverter to the emergency power source at a time of outage of the input power source with the controller;
a step of transmitting a multi-speed command sequence signal of a zero speed, to the inverter with the controller;
a step of controlling the brake to an open state with the controller,
a step of performing a zero speed control of the speed control system at a zero speed in the open state of the brake at the time of outage of the input power source, with the control section of the inverter,
a light load direction detecting step of calculating a value of the torque command of the speed control system at a time of execution of the zero speed control, and detecting a light load direction of the motor determined by a weight balance between the elevator car and the counterweight among rotational directions of the motor sensed by the encoder, in accordance with a polarity of the calculated value of the torque command, with a light load direction detecting section of the control section of the inverter,
a step of setting the multi speed command sequence signal to be transmitted to the inverter, to a speed other than the zero speed at a time of detection of the light load direction of the motor by the light load direction detecting step, with the controller,
a step of calculating a value of the speed command in accordance with a motor rotational direction of the light load direction and the multi speed command sequence signal from the controller, in the open state of the brake after the light load direction is detected by the light load detecting step, and controlling the speed control system by using the calculated value of the speed command, as the speed command to the speed control system, with the control section of the inverter.
